# DEMANDE DE BREVET EUROPEEN

(11) **EP 1 124 367 A1**
(43) Date de publication de la demande: **16.08.2001**
(21) Numéro de dépôt: 01400327.1
(22) Date de dépôt: 09.02.2001
(51) Int. Cl.: H04M 3/56

(54) **Système de radiocommunication public**

(30) Priorité: 10.02.2000 FR 0001657
(71) Demandeur: Vesta Finance, 75008 Paris (FR)
(72) Inventeur: Delahaye Achille, Joseph-Marie François, 94430 Chennevieres (FR)
(74) Mandataire: Colas, Jean-Pierre

(57) **Abrégé**

Le système comprend des mobiles émetteurs-récepteurs, des stations fixes susceptibles d'établir des communications avec les mobiles, un réseau de raccordement des stations fixes entre elles, et des moyens de gestion du réseau, desdits mobiles, et des communications entre les mobiles et les stations fixes. Au moins une partie desdits mobiles (M1, M2) comprennent des moyens de génération d'une demande d'ouverture d'un canal de communication multi-locuteurs à accès libre, et des moyens de génération d'une demande de rattachement à un tel canal. Les moyens de gestion (C1, MSC1, MSC2, MSC3, VLR) comprennent des premiers moyens de commande conditionnelle pour commander l'ouverture d'un tel canal en réponse à au moins une condition comprenant une demande d'ouverture en provenance successivement d'au moins un premier et un deuxième mobiles, des moyens de rattachement d'un mobile à un tel canal en réponse à la génération d'une demande de rattachement par ledit mobile, des moyens de sélection pour n'autoriser l'émission sur un tel canal que d'un seul mobile à la fois, des moyens pour transmettre simultanément à tous les mobiles rattachés à un tel canal une émission sur ledit canal en provenance d'un mobile sélectionné, et des seconds moyens de commande conditionnelle pour commander la fermeture d'un tel canal en fonction de critères prédéterminés.

## Description

La présente invention concerne les systèmes de radiocommunication publics.

Parmi les systèmes de radiocommunication publics, les systèmes numériques cellulaires, tels que les systèmes publics européens GSM et DCS, connaissent un très grand développement.

Un système de radiocommunication numérique cellulaire public, tel qu'un réseau PLMN au standard GSM-DCS, permet d'établir des communications entre des radiotéléphones mobiles(ci-après appelés mobiles) appartenant au même réseau PLMN, entre des mobiles appartenant à des réseaux PLMN différents ou entre des mobiles et des abonnés d'autres réseaux tels qu'un réseau RTC (réseau téléphonique commuté), un réseau RNIS (réseau numérique à intégration de services) ou similaire. Ces communications peuvent être établies en mode point à point, en mode point-multipoints, et en mode multipoints.

Dans le mode point à point, la communication est établie en mode dédié standard, le terme dédié sous-entendant une allocation d'une voie montante et d'une voie descendante réservées pour chaque mobile. Cette configuration correspond au cas standard d'une communication fermée, donc confidentielle.

Les modes point-multipoints et multipoints correspondent à des configurations particulières liées à des services supplémentaires vocaux. Ces services n'interdisent pas les appels en mode dédié, et des mécanismes gestion de double appel sont mis en oeuvre.

L'un de ces services supplémentaires MPTY (MultiParTY) correspond au mode conférence en duplex avec un nombre limité d'interlocuteurs simultanés fixé à 5.

Un autre service supplémentaire VBS (Voice Broadcast Service) permet la diffusion de message vocaux sur un canal commun à tous les mobiles rattachés à ce service en semi-duplex. Cette fonctionnalité n'est disponible que pour certains abonnés. Ce mode présente un intérêt limité car un seul et unique abonné est autorisé à émettre sur le canal commun.

Il existe par ailleurs des systèmes de radiocommunication analogiques, tels que les systèmes radioamateurs dénommés Citizen Band ou CB, permettant à leurs utilisateurs de communiquer librement entre eux sur des canaux (bandes de fréquences) attribués. Ces systèmes de radiocommunication de type CB ont notamment pour avantages la gratuité des communications et la possibilité offerte à tous de se connecter sur un canal pour y écouter les émissions et y intervenir. Toutefois, les postes émetteurs requièrent une puissance d'émission significative, la portée des communications demeure limitée par la distance entre les postes et par le relief, leur qualité sonore est le plus souvent médiocre, et seule de la voix peut être transmise.

L'invention vise à fournir un système de radiocommunication permettant de conjuguer les avantages et fonctionnalités des systèmes de radiocommunication analogiques de type Citizen Band avec ceux des systèmes numériques cellulaires publics.

A cet effet, l'invention a pour objet un système de radiocommunication numérique cellulaire, comprenant des mobiles émetteurs-récepteurs, des stations fixes susceptibles d'établir des communications avec les mobiles, un réseau de raccordement des stations fixes entre elles, et des moyens de gestion du réseau, desdits mobiles, et des communications entre les mobiles et les stations fixes, caractérisé en ce que :
- au moins une partie desdits mobiles comprennent
   * des moyens de génération d'une demande d'ouverture d'un canal de communication multi-locuteurs à accès libre,
   * des moyens de génération d'une demande de rattachement à un canal de communication multi-locuteurs à accès libre ouvert, et
- lesdits moyens de gestion comprennent :
   * des premiers moyens de commande conditionnelle pour commander l'ouverture d'un canal de communication multi-locuteurs à accès libre en réponse à au moins une condition comprenant une demande d'ouverture en provenance successivement d'au moins un premier et un deuxième mobiles,
   * des moyens de rattachement d'un mobile à un canal de communication multi-locuteurs à accès libre ouvert en réponse à la génération d'une demande de rattachement par ledit mobile,
   * des moyens de sélection pour n'autoriser l'émission sur un canal de communication multi-locuteurs à accès libre ouvert que d'un seul mobile à la fois,
   * des moyens pour transmettre simultanément à tous les mobiles rattachés à un canal de communication multi-locuteurs à accès libre ouvert une émission sur ledit canal en provenance d'un mobile sélectionné, et
   * des seconds moyens de commande conditionnelle pour commander la fermeture d'un canal de communication multi-locuteurs à accès libre ouvert en fonction de critères prédéterminés.

De préférence, le système de radiocommunication selon l'invention comporte également les caractéristiques suivantes considérées seules ou en combinaison :
- lesdits moyens de gestion comprennent des moyens de détermination de la position géographique desdits mobiles et ladite ouverture d'un canal de communication multi-locuteurs à accès libre par lesdits premiers moyens de commande conditionnelle est subordonnée à la localisation desdits premier et deuxième mobiles dans une zone d'accrochage déterminée ;
- lesdits moyens de rattachement commandent le rattachement d'un mobile à un canal de communication multi-locuteurs à accès libre ouvert sous condition que ledit mobile appartienne à la zone d'accrochage ;
- lesdits moyens de gestion comprennent des moyens de détachement pour exclure dudit canal de communication multi-locuteurs à accès libre ouvert un mobile rattaché sortie de ladite zone d'accrochage ;
- lesdits moyens de gestion comprennent des moyens pour commander sélectivement le basculement en mode point à point de deux mobiles rattachés à un canal de communication multi-locuteurs à accès libre ouvert, consécutivement à la sortie hors de ladite zone d'accrochage de l'un au moins desdits mobiles ;
- ladite zone d'accrochage est une zone géographique ;
- ladite zone géographique est asservie à la position géographique dudit premier mobile au moment de l'ouverture dudit canal de communication multi-locuteurs à accès libre ;
- ladite zone géographique est fonction de la position géographique dudit premier mobile et lesdits moyens de gestion sont adaptés pour déplacer ladite zone géographique en fonction du déplacement dudit premier mobile ;
- ladite ouverture d'un canal de communication multi-locuteurs à accès libre par lesdits premiers moyens de commande conditionnelle est subordonnée à la disponibilité en ressource radiofréquence dudit réseau au moment où ladite demande d'ouverture d'un canal de communication multi-locuteurs à accès libre est initiée ;
- ladite ouverture d'un canal de communication multi-locuteurs à accès libre par lesdits premiers moyens de commande conditionnelle est subordonnée à l'émission d'au moins un message par chacun desdits premier et deuxième mobile ;
- lesdits seconds moyens de commande conditionnelle sont adaptés pour commander, en fonction de l'un au moins des critères suivants, la fermeture d'un canal de communication multi-locuteurs à accès libre ouvert :
   * absence d'émission sur ledit canal ouvert pendant une durée supérieure à un premier seuil déterminé,
   * nombre de mobiles rattachés à un canal de communication multi-locuteurs à accès libre ouvert inférieur à un deuxième seuil déterminé,
   * disponibilité de la ressource radiofréquence dudit réseau inférieure à un troisième seuil déterminé ;
- lesdits moyens de gestion comprennent des moyens pour transmettre à chacun desdits mobiles rattachés au canal de communication multi-locuteurs à accès libre ouvert l'une au moins des informations comprenant :
   * des données d'identification des autres mobiles,
   * la distance actuelle entre ledit mobile et les autres mobiles,
   * une liste actuelle des canaux de communication multi-locuteurs à accès libre ouverts ;
- lesdits moyens de transmission comprennent des moyens d'inhibition pour interdire la réception par un mobile d'un signal émis par ledit mobile sur un canal de communication multi-locuteurs à accès libre ouvert ;
- ledit système comprend plusieurs réseaux de radiocommunication distincts et au moins une unité centrale de coordination desdits réseaux pour la gestion d'un canal de communication multi-locuteurs à accès libre ouvert entre mobiles appartenant à des réseaux différents.

D'autres caractéristiques et avantages de l'invention ressortiront de la description qui va suivre de modes de réalisation donnés uniquement à titre d'exemples et illustrés par les dessins annexés sur lesquels :
- la figure 1 est un schéma d'ensemble d'un réseau de radiocommunication numérique cellulaire public ;
- la figure 2 est un organigramme illustrant la procédure d'ouverture d'un circuit virtuel conformément à l'invention ;
- la figure 3 est un schéma illustrant les zones d'accrochage de deux mobiles lors de l'établissement d'un circuit virtuel , et
- la figure 4 est un schéma d'un équipement associé à un mobile pour la mise en oeuvre de l'invention.

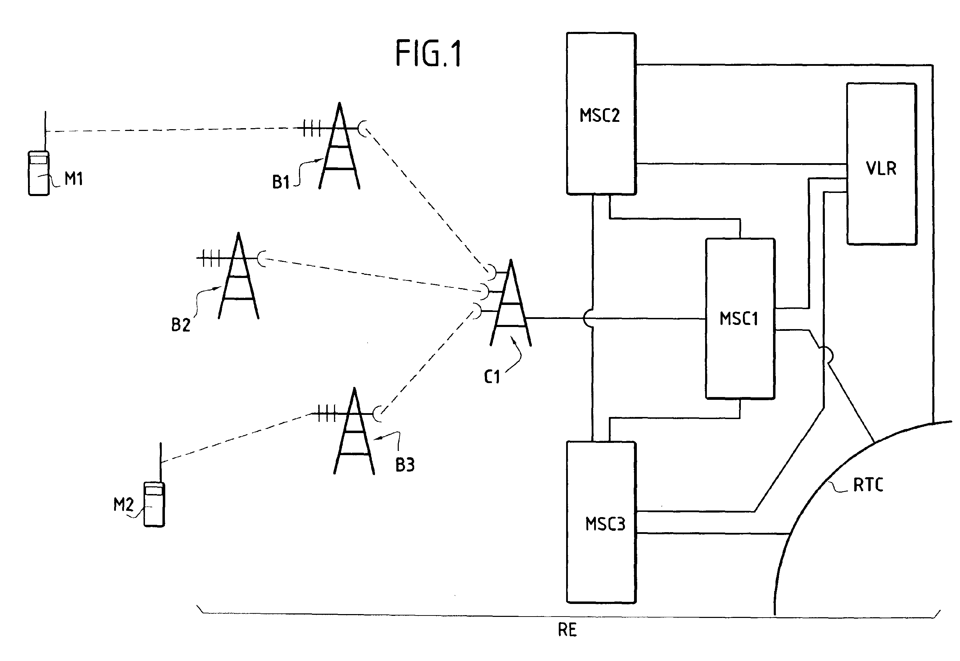

La structure générale d'un réseau de radiocommunication numérique cellulaire public de type GSM-DCS est représentée à la figure 1. Un tel système comprend, d'une part un réseau fixe RE et d'autre part des mobiles M susceptibles d'être connectés entre eux, avec des mobiles d'un autre système de radiocommunication numérique cellulaire, ou avec des abonnées d'un réseau téléphonique analogique (RTC) ou numérique (RNIS).

Le réseau fixe RE comprend des stations de base BTS (Base Transceiver Station) pourvues chacune d'un ou plusieurs émetteurs TX et récepteurs RX (non représentés) et capable de transmettre vers des mobiles M et de recevoir de ceux-ci sous forme numérique des données (voix, messages, données, images, fichiers, etc.) par voie hertzienne. Dans le système GSM-DCS actuel, la liaison entre les mobiles M et les BTS est assurée par voie hertzienne dans la bande des 900 MHz et des 1800 MHz. Une fréquence est allouée pour chaque émetteur TX et chaque récepteur RX d'une station BTS. Un partage temporel de cette fréquence en huit intervalles de temps, ci-après appelés slots, permet de disposer de sept communications indépendantes simplex. Pour une communication duplex, un TX et un RX doivent être associés Un slot TX et un slot RX permettent d'établir une connexion dédiée standard (duplex) pour chaque mobile.

Des mécanismes sont prévus pour changer de fréquence sur une BTS en cas de problème d'émission sur la fréquence utilisée (Frequency Hopping).

Dans une connexion entre deux mobiles, deux slots d'émission E et deux slots de réception R sont donc requis. En fonction des déplacements des mobiles, les slots et les fréquences des TX et des RX changent conformément à une procédure de basculement d'une BTS à une autre BTS, appelée procédure de Handover, définie dans la norme de chaque système. Chaque slot transporte des données qui peuvent correspondre à de la voix compressée, ou des données ou autres informations fournies par l'abonné. Les mécanismes de gestion des connexions font appel à d'autres ressources radiofréquences avec des canaux spécialisés bidirectionnels ou unidirectionnels.

Chaque BTS définit une cellule correspondant à une aire géographique à l'intérieur de laquelle un mobile M est susceptible d'établir une liaison avec la BTS. La configuration topologique de l'ensemble des cellules du système de radiocommunication définit sa couverture géographique. Sur la figure 1, seuls trois BTS B1, B2 et B3 ont été représentés, ainsi que deux mobiles M1 et M2.

Les stations de base BTS échangent des données par liaison hertzienne avec des stations de commande BSC (Base Station Controller). Ces dernières sont elles-mêmes connectées par câbles à des unités de commutation MSC (Mobile-services Switching Center) assurant l'interconnexion de l'ensemble des BTS entre elles et avec le réseau RTC. Sur la figure 1, une seule station de commande BSC désignée par la référence C1, ainsi que trois unités de commutation MSC désignées par les références MSC1, MSC2 et MSC3 ont été représentées. Sur cette figure, les liaisons assurées par voie hertzienne ont été représentées en trait interrompu et celles assurées par câblage ont été représentées en trait plein. Il doit être entendu que ces modes de liaison ne sont que des exemples, seule la liaison entre les mobiles M et les stations BTS étant par définition assurée par voie hertzienne.

Les stations de commande BSC possèdent des unités de traitement intégrant des mécanismes de compression et de décompression des signaux vocaux similaires à ceux des mobiles M et assurant la conversion à la norme de transport standard en télécommunications (64 kbits/s) des signaux transmis vers des unités de commutation MSC. Les stations BSC gèrent la ressource radiofréquence. Elles commandent l'allocation des canaux, contrôlent les puissances d'émission des mobiles et/ou des BTS et prennent les décisions d'exécution des handover.

Une unité de commutation MSC gère l'établissement des communications entre un mobile et une autre MSC et l'exécution d'un handover lorsqu'elle y est impliquée. Elle dialogue avec un enregistreur VLR (Visitor Location Register), qui constitue une base de données mémorisant les données d'abonnement des abonnés présents dans une zone géographique. Plusieurs MSC peuvent être reliées à un même VLR, où il peut n'y avoir qu'une seule MSC par VLR.

L'ensemble des BSC, MSC et VLR, ainsi que les programmes associés, constituent ce qui, dans la suite, a été dénommé moyens de gestion du réseau. Pour une description plus détaillée des réseaux GSM-DCS, on pourra se reporter à l'ouvrage de Messieurs Xavier Lagrange, Philippe Godlewski et Sami Tobbane intitulé "RESEAUX GSM-DCS, des principes à la norme" publié chez HERMES (FRANCE).

L'ensemble des stations BTS associées à une unité MSC forme un site, c'est-à-dire une unité géographique de base ayant une couverture variable selon le nombre de BTS rattachés, la capacité de celles-ci, et les distances entre celles-ci.

Le dimensionnement du réseau RE d'un système de radiocommunication numérique cellulaire public (nombre de canaux par cellule, nombre de cellules par site, densité des sites) tient compte des objectifs de couverture, de la densité de la population, de la sensibilité de certains lieux, du rendement de certains lieux et des limitations techniques apportées par les solutions techniques retenues, la bande de fréquence allouée et les coûts d'investissement. La ressource radiofréquence est limitée et le nombre de communications susceptibles d'être établies à un instant dépend de l'heure et du lieu. Un dimensionnement supérieur à une demande normale est impératif pour assurer à peu près en permanence l'établissement de communications, un maintien des communications en roulant (à l'exception des lieux où le relief est défavorable ou la propagation difficile, voire impossible), et une durée non limitée des connexions. Plus le trafic est intense, plus la ressource radiofréquence diminue, jusqu'à la limite d'une ressource nulle en cas d'événements exceptionnels.

Cependant, la ressource radiofréquence est fortement sollicitée uniquement dans certains créneaux horaires. Il reste donc à certaines heures et en certains lieux une ressource radiofréquence (slots) disponible. Cette disponibilité pourrait d'ailleurs s'accroître avec l'avènement de la troisième génération de réseaux de radiocommunication cellulaires au standard UMTS car la ressource radiofréquence utilisée pour les connexions dédiées pourrait diminuer sur les réseaux actuels.

Selon l'invention, cette disponibilité, en dehors de certaines périodes de pointe, d'une ressource radiofréquence non utilisée dans les systèmes de radiocommunication numérique cellulaires publics existants est mise à profit pour créer des canaux de communication multi-locuteurs à accès libre, ci-après appelés circuits virtuels ou CV, qui sont alloués temporairement par les moyens de gestion du réseau en fonction de la disponibilité en ressource radiofréquence. Ces circuits ou canaux virtuels multi-locuteurs à accès libre, qui utilisent les mêmes slots et les mêmes fréquences qu'en mode dédié, offrent, comme décrit ci-après, des fonctionnalités similaires à celles de la Citizen Band, c'est-à-dire un accès libre de chaque mobile comportant les fonctionnalités appropriées, sans discrimination des entrants.

La fonctionnalité ou service " CB " mis en oeuvre par des canaux multi-locuteurs alloués temporairement ne fait pas appel à la notion de groupe d'utilisateurs fermé où les entrées sont contrôlées, mais par contre, elle implique :
- d'une part, une gestion des circuits virtuels CV présentés ci-après et des liens créés par les connexions établies pendant la durée de vie des CV,
- d'autre part, le contrôle, pendant la connexion, de l'occupation des voies d'émission (partage de la ressource radiofréquences allouée aux CV et fixation d'une durée d'émission maximale). La variation de la ressource radiofréquence impose une gestion de la durée de vie des CV qui ont donc un caractère temporaire et sont non prioritaires par rapport aux communications " dédiées ".

Le réseau RE évalue la charge de chaque slot alloué au service " CB " et gère la répartition. Les sites avec plusieurs couples TX-RX allouent les slots au service " CB " sur un seul couple TX-RX (ou plus si la ressource dépasse 7 slots avec un rassemblement sur le nombre minimal de couples TX-RX et une répartition uniforme entre les couples de TX-RX afin d'éviter des changements de fréquence).

Le nombre de CV pouvant être ouverts, respecte un rapport avec les nombre de slots alloués au service "CB". Les canaux dédiés conservent un droit de préemption, ce qui impose des mécanismes de fermeture des CV avec des critères de sélection, comme cela sera décrit dans la suite.

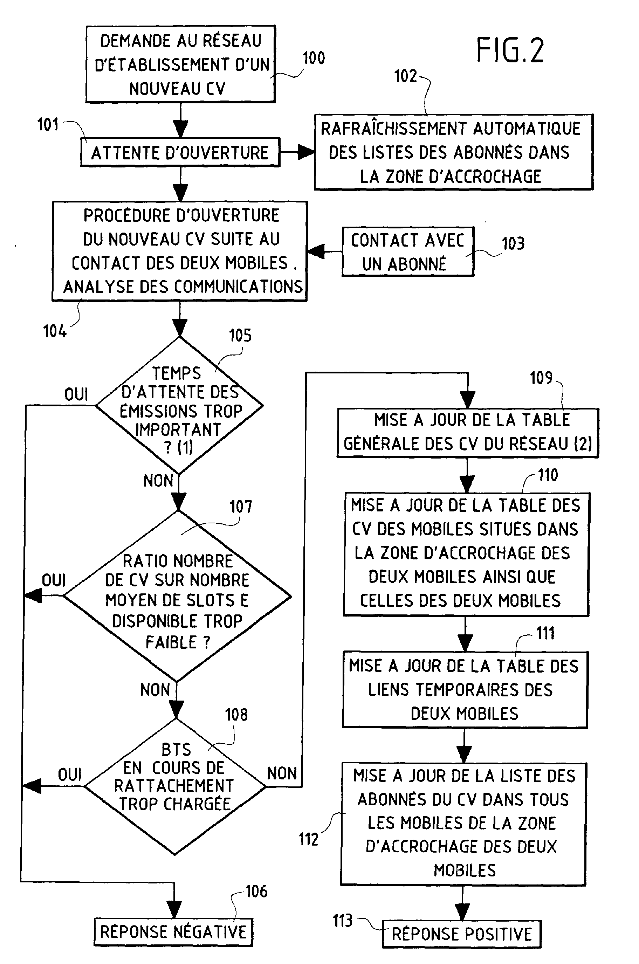

On se référera maintenant à la figure 2 qui illustre la procédure d'établissement d'un nouveau circuit virtuel CV par le réseau RE.

L'étape 100 correspond à une demande faite par un mobile M1 au réseau RE d'établir un nouveau circuit virtuel CV. Cette demande est transmise par le mobile M1 sous forme d'un code à la BTS de sa zone de localisation. Ce code peut être généré à partir du mobile M1 par tout moyen approprié, par exemple par commande vocale, par sélection au moyen d'un menu ou d'une ou plusieurs touches d'un mobile standard, ou encore par enfoncement d'une touche spécifique prévue sur le mobile M1 ou sur un équipement associé à ce mobile. A l'étape 101, les moyens de gestion du réseau RE sont en attente d'ouverture d'un nouveau circuit virtuel CV et, en 102, ils rafraîchissent automatiquement une liste des abonnées titulaires de mobiles qui se trouvent dans la zone d'accrochage qui sera définie dans la suite.

Lorsque, à l'étape 103, un deuxième mobile M2 transmet également une demande d'ouverture d'un nouveau circuit virtuel, les moyens de gestion initient en 104 la procédure d'ouverture d'un nouveau circuit virtuel et procèdent à une analyse des communications échangées par les mobiles M1 et M2. Si les mobiles M1 et M2 ne procèdent pas à des émissions dans un délai imparti (test 105), la réponse du réseau RE à la demande d'ouverture d'un nouveau circuit virtuel est négative (étape 106).

Si le délai du test 105 n'est pas dépassé, le réseau examine à l'étape 107 si le rapport entre le nombre de circuits virtuels déjà ouverts et le nombre moyen de slots d'émission E disponibles est trop faible ou non. Dans l'affirmative, on passe à l'étape 106, tandis que dans la négative le réseau examine en 108 si la BTS en liaison avec le premier mobile M1 ayant fait une demande d'ouverture de circuit virtuel est ou non trop chargée. Dans l'affirmative, on passe à l'étape 106 et il n'est pas donné suite à la demande d'ouverture, tandis que dans la négative, on passe à l'étape 109 de mise à jour d'une table générale des circuits virtuels du réseau.

Les moyens de gestion du réseau RE procèdent ensuite successivement :
- en 110, à une mise à jour d'une table des circuits virtuels accessibles aux mobiles situés dans la zone d'accrochage des deux mobiles M1 et M2 ayant ouvert le nouveau circuit virtuel ;
- en 111, à une mise à jour d'une table des liens temporaires des deux mobiles M1 et M2 ; et
- en 112, à une mise à jour, dans tous les mobiles de la zone d'accrochage des deux mobiles M1 et M2, de la liste des abonnés rattachés à ce nouveau circuit virtuel.

En 113, la réponse à la demande d'ouverture d'un nouveau circuit virtuel CV est positive et celui-ci se trouve donc ouvert.

De préférence, les communications sur un circuit virtuel CV ont lieu en mode semi-duplex avec une intervention manuelle pour passer en mode émission. Une émission vocale en mode semi-duplex doit être limitée en durée et un mobile en réception doit maintenir sa liaison avec la BTS suffisamment longtemps pour éviter des connexions et des déconnexions intempestives. Pour chaque mobile ayant ouvert un circuit virtuel ou rattaché à celui-ci, les moyens de gestion du réseau déterminent le slot de réception R et le slot d'émission E attribué, pour le circuit virtuel considéré, à la BTS de la zone de localisation de ce mobile.

En mode semi-duplex, les mécanismes de gestion d'émissions simultanées par les mobiles sont similaires à ceux du Service Supplémentaire VGCS ("Voice Group Closed Service") du standard GSM-DCS. Le réseau détecte le premier mobile à émettre mais laisse une courte durée d'émissions simultanées. Le réseau somme les signaux audio des abonnés en cours d'émission avant de les transmettre. En cas de demande d'émission simultanée de deux mobiles sur une même cellule d'une BTS, le brouillage des signaux a pour conséquence que la BTS ne peut répondre et chacun des mobiles réitère sa requête avec une temporisation aléatoire, donc différente, donnée sur un canal spécialisé. Le premier mobile ayant réitéré sa requête sera retenu et l'autre rejeté. Le réseau n'autorisera un autre mobile à émettre que lorsque plus aucune émission ne sera active. L'abonné bascule en émission par une action sur un contacteur du mobile ou par une détection dans ce dernier d'une activité de la parole (configuration selon le mobile). Le réseau ne transmet l'émission vocale vers les autres mobiles rattachés au CV qu'après réception d'un acquittement en provenance d'un mobile acceptant de recevoir. Cette information est transmise en retour au mobile en phase d'émission, qui bascule en émission et dont la voie de réception se trouve inhibée. Durant toute l'émission, le réseau RE envoie cette information d'émission vocale sur un canal de service, avec un récurrence de une ou deux secondes, afin que tout abonné qui n'est pas disponible pour diverses raisons au début de la transmission puisse disposer de cette information avant qu'il bascule en écoute de l'émission vocale.

Dès qu'un mobile a reçu un message d'identification correct et qu'il a accepté la communication, il bascule en écoute sur le slot de réception R attribué au CV auquel il est rattaché.

Un abonné ne peut entrer en contact avec un autre qu'au travers d'un CV auquel il est rattaché. Toutefois une commande optionnelle sur le mobile peut ouvrit tous les CV en écoute simultanée. Un système d'affichage des CV ouverts et de leur activité permet de faciliter la prise de contact. Dès qu'un CV ou plusieurs CV sont ouverts, tout nouvel arrivant peut choisir, soit de se rattacher à l'un des CV ouverts, soit chercher à ouvrir un nouveau CV avec l'un des abonnés rattachés, si la ressource le permet.

De manière facultative, il peut être prévu que, lors de l'ouverture d'un CV, les deux abonnés à l'origine de celui-ci génèrent une information transmise aux autres mobiles, via le réseau, indiquant leur souhait de ne pas accueillir d'autres abonnés sur ce CV. Cette information n'a qu'une valeur indicative et le CV reste néanmoins ouvert aux autres abonnés souhaitant s'y attacher.

Deux types de CV correspondant à deux utilisations de ce mode de communication peuvent être ouverts au choix des abonnés. Ils obéissant à des règles particulières qui seront décrites ci-après :
- Le CV itinérant correspondant à une utilisation dans un véhicule sur une longue distance,
- Le CV statique (ou thématique) correspondant à un forum local.

De préférence, les CV itinérants sont identifiés par le libellé de l'abonné ayant ouvert le CV ce qui, en association avec un code, permet de disposer de critères de sélection grâce auxquels les abonnés possesseurs de mobiles M peuvent activer une sélection automatique des CV et des autres abonnés déjà rattachés.

Une table des CV itinérants élaborée par le réseau est affichée sur les mobiles et comporte les champs suivants :
- CV : équivalent canal en CB avec un label qui prend le nom de l'abonné ayant ouvert le CV
- Itinérant/Thématique : I ou T
- Priorité ( définie dans la suite)
- Activité vocale en cours : échanges vocaux entre deux abonnés
- Nombre d'abonnés rattachés au CV
- Distance avec l'abonné le plus proche (calculée en fonction de la localisation des BTS auxquelles sont rattachés les mobiles)
- Heure CV: heure à laquelle le CV a basculé de EN ATTENTE à OUVERT

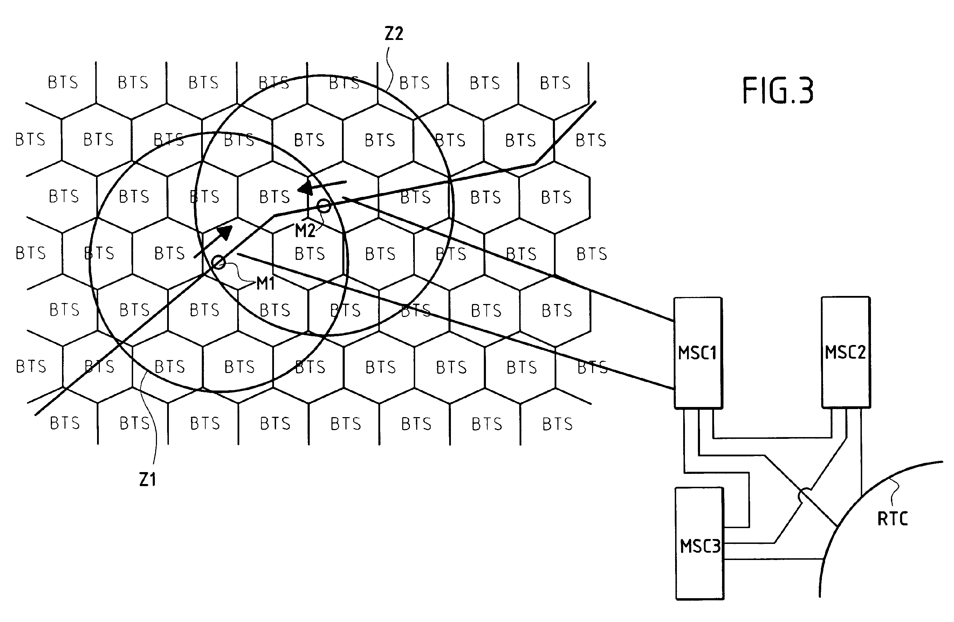

Un mobile M1 ne peut rentrer en contact avec un autre mobile M2 que si leurs zones géographiques d'accrochage Z1 et Z2 définies par le réseau (nombre de BTS), recouvrent leurs lieux d'émission comme illustré à la figure 3. La distance entre les abonnés est variable car elle dépend du nombre et de la taille des cellules définies par les BTS.

Le nombre de cellule d'une zone d'accrochage peut être :
- soit un nombre fixe avec une distinction zone urbaine très dense, zone rurale avec relief, zone rurale à très faible densité de BTS, zone en bord de mer avec une couverture maritime, etc.
- soit une taille de zone d'accrochage fixe avec une distinction entre zone urbaine moyennement dense, zone rurale sans relief, zone autoroutière, etc.

Les critères cités ci-dessus ne sont qu'à titre indicatif car la répartition est uniquement du ressort de l'opérateur du réseau en fonction de la capacité de son réseau à absorber la charge.

Les cellules d'une zone d'accrochage appartiennent soit à une même MSC comme représenté à la figure 3, soit à plusieurs MSC selon la situation du mobile. Sur cette figure, la station de commande BSC intermédiaire entre les cellules BTS dont dépendent les mobiles M1 et M2 et la MSC1 n'a pas été représentée pour la clarté du dessin. Le nombre de cellules d'une zone d'accrochage pour un mobile rattaché à une BTS déterminée varie en fonction de l'état du réseau.

Lors d'un rattachement, l'abonné est informé par le réseau de tous les CV ouverts dans sa zone d'accrochage. Durant toute la période où le mobile est rattaché, le réseau rafraîchit ses informations avec une récurrence définie. Suite à la procédure d'établissement d'un CV itinérant, le réseau enregistre le lien qui lie les deux abonnés. Puis, à chaque nouveau contact avec échange vocal avec un nouvel abonné, le réseau enregistre le nouveau lien temporaire. Cette procédure d'établissement d'un lien temporaire permet par la suite à chaque abonné de rentrer de nouveau en contact hors zone d'accrochage avec des mobiles avec lesquels il a déjà été en contact, par une simple sélection dans une liste comportant des informations complémentaires.

La connexion entre mobiles via un CV itinérant est établie en mode " non dédié " : le réseau maintient la communication vocale au travers des slots E et R communs tant qu'un mobile rattaché à ce CV itinérant reste dans la zone d'accrochage, si celui-ci n'a pas été l'instigateur du CV itinérant. Hors de la zone d'accrochage, la communication entre deux abonnés ayant établi un lien temporaire ne pourra être maintenue qu'en mode dédié. Suite à un appel de l'un des deux mobiles, l'abonné appelé peut alors choisir d'accepter ou non la connexion en mode dédié car l'opérateur peut choisir une tarification spécifique.

Le lien temporaire est établi et reste actif tant que la ressource le permet. Son ordre de priorité de fermeture variera en fonction des critères de gestion de priorité choisis par l'opérateur (possibilité d'un statut équivalent à une connexion en mode dédié standard).

Plusieurs cas de figure peuvent se présenter pour la sortie de la zone d'accrochage d'un CV itinérant:
- dès qu'un mobile sort de la zone d'accrochage d'un mobile déjà rattaché à un CV itinérant, il coupe la communication avec ce mobile ou, au choix de l'abonné, bascule en mode " dédié " avec une émulation du mode " CB ". Dans les deux cas, il garde le lien temporaire avec le CV;
- dès qu'un mobile sort de la zone d'accrochage dans laquelle il a ouvert un CV itinérant avec un abonné en attente d'ouverture plus ancienne, il coupe la communication avec ce mobile ou, au choix de l'abonné, bascule en mode " dédié " avec une émulation du mode " CB ". Dans les deux cas, il garde le lien temporaire avec le CV ;
- dès qu'un mobile sort de la zone d'accrochage dans laquelle il a ouvert un CV itinérant avec un abonné en attente d'ouverture moins ancienne, il reste en mode " non dédié " car il garde le CV qui par ailleurs a pris ses références comme label.

A chaque contact entre un premier mobile et un deuxième mobile, ceux-ci stockent chacun les coordonnées de l'autre dans une table dynamique de liens temporaires. Celle-ci doit être rafraîchie par le réseau avec une récurrence donnée pour déterminer tous les contacts encore valides. Deux mobiles en déplacement peuvent sortir de leur zone d'accrochage, le réseau maintiendra le CV tant que les critères de priorité permettront de maintenir le contact. Un avertissement sonore ou/et visuel indiquera la coupure imminente d'un CV. Cette table est affichée sur l'écran du mobile comme la liste des CV .

La table des liens temporaires du mobile comporte les champs suivants :
- Nom de l'abonné : ce label doit être saisi avant le rattachement au service «CB» par l'abonné. Il peut correspondre à un surnom, un pseudonyme, un nom codé, une référence, etc.
- CV auquel le lien temporaire fait référence: équivalent canal en CB avec un label qui prend le nom de l'abonné ayant ouvert le CV
- Priorité du CV auquel le lien temporaire fait référence
- Heure d'établissement du lien
- Distance : en km (évaluation à partir du nombre de cellules pondéré par les types de BTS auxquelles ont été rattachés les deux mobiles)
- Temps de communication vocale : il tient compte du temps d'émission des deux mobiles en mode semi-duplex.

Un CV fixe ou thématique est ouvert dans une zone de communication couverte par la BTS à laquelle est rattaché le premier mobile à avoir initié l'ouverture du CV. Cette BTS sera la cellule centrale d'une zone de communication ayant un nombre de cellules rattachées défini.

La taille d'une zone de communication associée au CV thématique peut être définie :
- soit par un nombre fixe de cellules avec une distinction zone urbaine très dense, zone rurale avec relief, zone rurale à très faible densité de BTS, zone en bord de mer avec une couverture maritime, etc.
- soit par une distance fixe (rayon) avec une distinction entre zone urbaine moyennement dense, zone rurale sans relief, zone autoroutière, etc.
- soit par un critère géographique particulier.

Les critères cités ci-dessus ne sont qu'à titre indicatif car la répartition est uniquement du ressort de l'opérateur en fonction de la capacité de son réseau à absorber la charge.

Un CV thématique est orienté forum et peut être raccordé à un forum sur Internet du type NETMEETING au travers de l'accès INTERNET du réseau. A l'ouverture du CV thématique, l'abonné qui le crée inscrit le nom du thème.

Un CV thématique ne peut augmenter sa zone de communication. Par contre, un abonné rattaché à un CV thématique peut parrainer un ou plusieurs abonnés hors zone de communication déjà rattachés au service " CB " et à un autre CV thématique. Dès le basculement de CV thématique effectué, l'abonné " parrain " peut disparaître sans couper les liens qu'il a générés.

Un abonné parrainé peut à son tour parrainer un autre abonné. Le parrainage est réalisé en mode " dédié ". Suite à l'appel d'un abonné appelant en mode dédié, l'abonné rattaché à un CV thématique réalisera le parrainage en se détachant temporairement du service " CB ". De même, un abonné déjà rattaché à un CV thématique peut se détacher temporairement pour appeler en mode " dédié " un autre abonné pour le rattacher. Ces communications en mode dédié peuvent être soumises à une tarification spécifique par l'opérateur.

Un CV thématique donc statique, peut accueillir des abonnés se déplaçant et établir des liens temporaires afin que la communication ne soit pas interrompue alors qu'il y a une activité vocale. Les règles de gestion sont identiques à celles du CV itinérant.

Plusieurs cas de figure peuvent se présenter pour la sortie de la zone d'accrochage d'un CV thématique :
- dès qu'un mobile sort de la zone d'accrochage d'un mobile déjà rattaché au CV thématique, il bascule en mode " dédié " avec une émulation du mode " CB " ;
- dès qu'un mobile sort de la zone d'accrochage dans laquelle il a ouvert un CV thématique avec un abonné en attente d'ouverture plus ancienne, il bascule en mode " dédié " avec une émulation du mode " CB ";
- dès qu'un mobile sort de la zone d'accrochage dans laquelle il a ouvert un CV thématique avec un abonné en attente d'ouverture moins ancienne, il bascule en mode " dédié " avec une émulation du mode " CB ". Le CV garde ses références comme label car le CV thématique n'est pas fermé si d'autres abonnés sont encore rattachés. Dans le cas contraire, le CV est fermé et le réseau propose à l'abonné restant de basculer soit en connexion dédiée, soit d'établir un CV itinérant, soit de se rattacher à un autre CV thématique ouvert, soit d'être en attente d'ouverture de CV.

De par son organisation statique, le CV thématique est le plus à même d'accueillir une communication Internet locale avec un basculement du mode vocal vers un mode vocal + données pouvant échanger des messages visuels (images, textes). L'abonné n'a pas de connexion dédiée, il envoie simultanément ses messages à l'ensemble des autres abonnés et vers Internet.

Une table des CV thématiques est affichée sur le mobiles et comporte les champs suivants :
- CV : équivalent canal en CB avec un label qui prend le nom du thème choisi par l'abonné ayant ouvert le CV (le réseau vérifie si le nom est déjà en cours d'utilisation)
- Itinérant/Thématique_: I ou T
- Priorité ( définie ci-après)
- Activité vocale en cours : échanges vocaux entre deux abonnés
- Nombre d'abonnés rattachés au CV
- Distance moyenne calculée sur la localisation des BTS auxquelles sont rattachés les mobiles
- Heure CV : heure à laquelle le CV bascule de EN ATTENTE à OUVERT

Une table des abonnés rattachés à un CV comporte les champs suivants (base minimale):
- Nom de l'abonné : Ce label doit être saisi avant le rattachement au Service Supplémentaire par l'abonné. Il peut correspondre à un surnom, un pseudonyme, un nom codé, une référence, etc.
- Nom du CV :_il correspond au nom de l'abonné ayant ouvert le CV ou le nom du thème que celui-ci a choisi
- Type de CV : L (lien temporaire) ou P (parrainé)
- Priorité du CV
- Nombre d'abonnés
- Heure d'établissement du lien ou du parrainage
- Distance moyenne par rapport au barycentre_: en km (évaluation moyenne à partir du nombre de cellule pondéré par les types de BTS auxquelles sont rattaché les abonnés)
- Temps de communication vocale : il tient compte du temps d'émission des abonnés en mode semi-duplex

Lorsque la ressource diminue localement (BTS) pour un abonné, celui-ci est mis en mode attente.

Par contre, si la ressource diminue globalement (un pourcentage d'abonnés rattachés au service «CB» en attente pour passer en mode émission dépasse un seuil défini par l'opérateur), le réseau sélectionne les CV à fermer. Les CV restants sont basculés sur les slots encore disponibles, et ainsi de suite jusqu'au mode de repli maximal. Les CV thématiques sont prioritaires sur les CV itinérants.

Plusieurs critères sont utilisés pour gérer les déconnexions lorsque la ressource diminue :
- l'activité vocale de chaque CV, qui apparaît comme le plus important ;
- le nombre d'abonnés rattachés au CV ;
- l'antériorité du CV ;
- la distance entre abonnés d'un même CV .

Lorsqu'un mobile se déplace, le réseau doit, à chaque basculement du mobile d'une BTS à une autre BTS ( Handover), redéfinir les BTS constituant la zone d'accrochage. Le mobile n'intervient pas sur la configuration de la BTS, seul le réseau (BSC, MSC, etc.) gère la mobilité. Les mesures de qualité de transmission réalisées par les mobiles sont transférées au BSC qui analyse et gère le Handover. Si les BTS sont réparties sur plusieurs BSC, la MSC coordonne les actions entre les BSC. Par contre, si les BTS appartiennent à deux MSC différentes, le Handover est géré par les deux MSC concernées.

L'accessibilité au service " CB " ne transite pas par une connexion en mode dédié. Cependant, pour garder en arrière plan du service " CB " toutes les fonctions de messagerie, d'appel pour une communication dédiée, etc., le réseau établit un lien virtuel similaire à celui d'une connexion " dédiée ". Le retour en mode " dédié " peut être, soit définitif si le service "CB" est fermé par manque de ressource, soit temporaire à la demande de l'abonné pour établir une connexion en mode " dédié " ou accéder à d'autres services supplémentaires.

Par ailleurs, lorsqu'un abonné souhaite se détacher du service " CB ", celui-ci informe le réseau et attend son acquittement. Si le temps de réponse est trop lent, le mobile prend la décision de se détacher sans attendre l'acquittement. Le réseau gère ce détachement, dès qu'il détecte l'absence du mobile, par les mécanismes de rafraîchissement des listes d'abonnés rattachés aux CV.

Selon l'endroit, les conditions climatiques et l'heure, le réseau peut ne pas pouvoir assurer une connexion permanente. Lors d'une interruption de la connexion par le réseau, celui-ci doit rétablir la connexion automatiquement dès que les conditions de transmissions le permettent. Cet automatisme est inhibé quand :
- l'abonné a demandé le détachement du service " CB "
- le mobile de l'abonné ne répond pas pendant une durée supérieure à une durée limite définie par l'opérateur. La temporisation de reconnexion est augmentée à chaque nouvelle tentative jusqu'à une limite fixée par l'opérateur.

La gestion des communications par le réseau dans le mode " CB " apporte les avantages et les fonctionnalités suivants :
- identification des interlocuteurs : les abonnés peuvent cibler leur prise de contact par la diffusion de leur propre identification et par la sélection de leur interlocuteur dans une liste indiquant leurs caractéristiques ;
- continuité de la communications : de part la couverture globale d'un réseau du type GSM-DCS, la distance entre interlocuteurs n'a plus de conséquence directe sur la portée. Le réseau détermine la portée par le nombre de BTS affectées à une zone d'accrochage ;
- connaissance de la localisation et de la distance entre les interlocuteurs : cette information approximative (la granularité correspond à la couverture d'une BTS et dépend donc du type de BTS et de sa zone de couverture) est utile pour situer un interlocuteur ;
- possibilité de messagerie ;
- basculement direct en mode dédié : suite à une communication en mode ouvert sans confidentialité sur le contenu, deux abonnés peuvent basculer en mode dédié. Ce basculement de mode peut être soit temporaire, soit définitif avec une demande de détachement du service CB associé au passage automatique en mode dédié.
- connaissance des autres canaux avec leur activité vocale : un nouvel abonné rattaché au service " CB " peut choisir soit de se rattacher à un CV en activité ou ayant un caractère particulier , soit d'être en attente de contact. La fonction de scrutation (scanning de la Citizen Band) n'est plus nécessaire de part la connaissance permanente du réseau des abonnés rattachés et de leur activité vocale.
- rattachement à distance à d'autres canaux : cette fonctionnalité permet de contacter d'autres abonnés bien avant que l'abonné itinérant soit en un lieu donné. Cette possibilité est par exemple utile pour des flottes de véhicules avec une zone de rattachement ;
- la diffusion de messages d'alerte sur l'ensemble des CV ouverts.

Par ailleurs, des passerelles entre réseaux peuvent être prévues afin que tout abonné d'un réseau numérique cellulaire puisse entrer en contact dans le mode " CB " avec des abonnés d'autres réseaux si leurs contrats le permettent.

Du fait d'une organisation où chaque réseau a une gestion indépendante, une entité de coordination est nécessaire. Celle-ci doit connaître tous les CV établis dans chacun des réseaux et rattacher les mêmes CV par des connexions conformes aux choix retenus par les opérateurs avec une signalisation destinée à la gestion des différentes tables des mobiles (liste des CV, liste de liens temporaires, liste des CV thématiques, etc.).

Cette entité de coordination, l'unité centrale, ne gère pas la ressource radiofréquence ainsi que les abonnements qui sont uniquement du ressort des opérateurs. Les mécanismes de gestion mis en oeuvre dans le mode " CB " multi-réseaux doivent rendre les basculements simple-réseau/multi-réseaux quasi transparents pour l'abonné, hormis le paramètre " réseau ".

L'établissement d'un CV est initialisé à partir d'une demande d'un réseau et est accepté ou non par les autres réseaux en fonction de leur charge et de leurs ressources respectives. L'unité centrale de gestion n'est qu'une base de données par laquelle les réseaux se coordonnent. Elle suit les déplacements des mobiles à partir des informations continuellement rafraîchies par les réseaux, et établit les connexions entre abonnés, via les réseaux, quand les mobiles ont au moins une de leur zones d'accrochage qui le permet.

Lors d'événements exceptionnels rassemblant, en un lieu, un nombre très important d'abonnés, le mode " CB " présente un intérêt particulièrement intéressant de par l'économie de la ressource radiofréquence. Les abonnés ont la possibilité de se rejoindre physiquement, d'échanger des idées ou des sentiments sur un sujet, ou de demander une assistance grâce à la communication multi-locuteurs. Dans de telles conditions, la ressource radiofréquence ne doit pas être requise par des connexions " dédiées ", et des BTS affectées uniquement au mode " CB " sont installées pour couvrir une surface limitée. La ressource radiofréquence peut être partagée avec des BTS dédiées aux connexions " dédiées ", ces dernières n'ayant aucun droit de préemption sur les BTS dédiées aux connexions " CB ".

Il peut être également prévu des circuits virtuels ou CV compacts qui ne sont pas accessibles hors de leur zone d'accrochage. Un CV itinérant ou thématique ne pourra être ouvert, dans la zone de couverture allouée à un CV compact, que sur des BTS du réseau fixe indépendentes des BTS du CV compact. Les variations de charge imposent des règles de gestion particulières qui distinguent le CV itinérant et le CV thématique, d'un CV compact. Une zone d'accrochage associée à un CV compact se définit par les caractéristiques suivantes :
- concentration importante et temporaire de BTS (cellules) dans une zone géographique limitée ;
- rattachement de ce réseau temporaire à un réseau fixe pour la gestion des abonnés ;
- faible puissance des équipements et donc portée limitée ;
- plan de fréquence utilisé (cas du GSM-DCS) compatible avec les BTS du réseau fixe couvrant la zone haute densité. La faible puissance de BTS permet de ne pas brouiller les BTS plus éloignées.

Le mode " CB " décrit ci-dessus peut être étendu à la visioconférence. Bien entendu, celle-ci exige des débits de transmission nettement supérieurs au débit utile d'un slot. A la différence d'une communication du type consultation de données sur Internet avec des débits binaires à fortes variation et par intermittences (transmission par salves), la transmission d'images visuelles animées demande un flux quasi permanent dont le débit varie en fonction de la compression et du contenu de l'image.

L'allocation dynamique de slots, comme dans le mode HSCSD, ne répond que très partiellement aux exigences de la visioconférence. Pour un mode " CB voix + image", un support de transmission à haut débit, du type UMTS ou à défaut du type GPRS, est souhaitable.

Plusieurs méthodes de visualisation des abonnés sont possibles :
- soit seul l'abonné en émission est affiché
- soit les N derniers abonnés ayant émis sont affichés avec une grille de mosaïque fixe, seule l'image de celui en cours d'émission étant rafraîchie. Les autres images restent sur la dernière image avant la fin d'émission.
- soit les N derniers abonnés ayant émis sont affichés avec une mosaïque à géométrie variables. Les abonnés n'ayant pas émis au delà d'une certaine durée sont effacés.
- soit le réseau rafraîchit l'image de N abonnés (N étant limité par le réseau pour des raisons de charge ou d'impossibilité technique) de la mosaïque en mode semi-duplex ou en mode duplex pour la voix. Ce cas correspond à la visioconférence sur réseau fixe.

Le mode " CB voix + image " s'appuie sur des standards existants déjà utilisés sur Internet comme la WEBCAM. La compression de l'image est soit intégrée dans la caméra, soit implémentée dans le logiciel du mobile. La première solution permet de réduire les coûts de la version de base du mobile. Dans le cas de l'utilisation d'un PC associé à un mobile intégrant la fonction " CB ", la compression peut être réalisée par le PC. L'enregistrement visuel n'est qu'une option, et tout abonné peut ne pas être enregistré tout en étant dans le mode " CB voix + image ". Les échanges ne seront que vocaux. Le mode " CB voix + image " ne se limite pas qu'à la visualisation entre abonnés. L'envoi d'images fixes ou de séquences vidéo peut être utilisé pour l'assistance, le guidage ou la publicité.

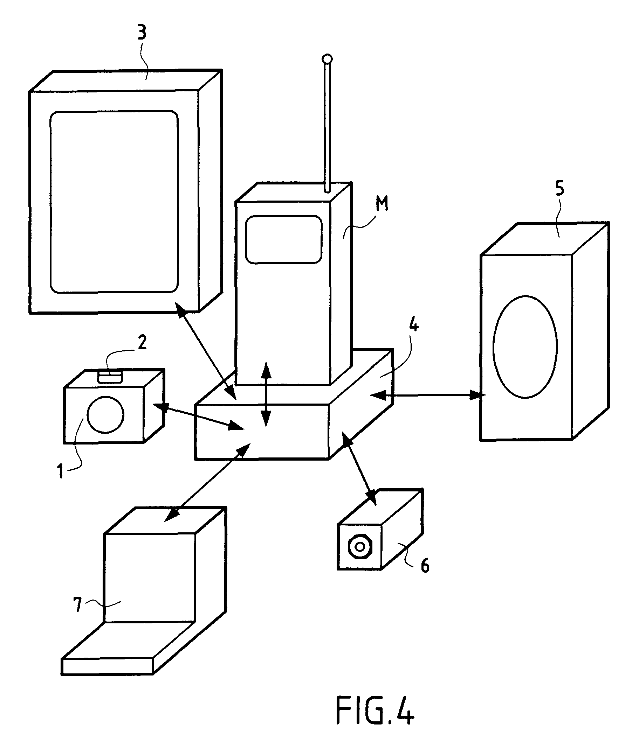

Le mode " CB " en radiocommunication numérique cellulaire est conçu pour être principalement utilisé soit dans un véhicule, soit sur un poste fixe, contrairement au mode " dédié ". L'abonné peut avoir une activité principale (par exemple conduire) que la communication " CB " vient interrompre. Avec des durée d'écoute importantes, un équipement d'accueil est de préférence associé au mobile pour en faciliter l'utilisation en mode " CB ". A titre d'exemple, comme représenté à la figure 4, cet équipement d'accueil peut comporter
- un micro 1 associé à un commutateur 2 pour passer en émission en mode "CB",
- un écran rétro éclairé 3 nécessaire en mode " CB " et en mode " CB voix + image ",
- un support 4 d'accueil et de charge électrique du mobile M,
- un haut parleur 5 autonome ou intégré dans le support d'accueil du portable
- une mini caméra 6 pour le mode " CB voix + image ",
- facultativement ,un ordinateur personnel PC 7.

## Revendications

1. Système de radiocommunication numérique cellulaire, comprenant :
- des mobiles émetteurs-récepteurs,
- des stations fixes susceptibles d'établir des communications avec les mobiles,
- un réseau de raccordement des stations fixes entre elles,
- des moyens de gestion du réseau, desdits mobiles, et des communications entre les mobiles et les stations fixes,
caractérisé en ce que :
- au moins une partie desdits mobiles (M1, M2) comprennent :
* des moyens de génération d'une demande d'ouverture d'un canal de communication multi-locuteurs à accès libre,
* des moyens de génération d'une demande de rattachement à un canal de communication multi-locuteurs à accès libre ouvert,
- lesdits moyens de gestion (C1, MSC1, MSC2, MSC3, VLR) comprennent :
* des premiers moyens de commande conditionnelle pour commander l'ouverture d'un canal de communication multi-locuteurs à accès libre en réponse à au moins une condition comprenant une demande d'ouverture en provenance successivement d'au moins un premier et un deuxième mobiles,
* des moyens de rattachement d'un mobile à un canal de communication multi-locuteurs à accès libre ouvert en réponse à la génération d'une demande de rattachement par ledit mobile,
* des moyens de sélection pour n'autoriser l'émission sur un canal de communication multi-locuteurs à accès libre ouvert établi que d'un seul mobile à la fois,
* des moyens pour transmettre simultanément à tous les mobiles rattachés à un canal de communication multi-locuteurs à accès libre ouvert une émission sur ledit canal en provenance d'un mobile sélectionné, et
* des seconds moyens de commande conditionnelle pour commander la fermeture d'un canal de communication multi-locuteurs à accès libre ouvert en fonction de critères prédéterminés.

2. Système selon la revendication 1, caractérisé en ce que lesdits moyens de gestion (C1, MSC1, MSC2, MSC3, VLR) comprennent des moyens de détermination de la position géographique desdits mobiles et ladite ouverture d'un canal de communication multi-locuteurs à accès libre par lesdits premiers moyens de commande conditionnelle est subordonnée à la localisation desdits premier et deuxième mobiles (M1, M2) dans une zone d'accrochage déterminée (Z1, Z2).

3. Système selon la revendication 2, caractérisé en ce que lesdits moyens de rattachement commandent le rattachement d'un mobile (M1, M2) à un canal de communication multi-locuteurs à accès libre ouvert sous condition que ledit mobile appartienne à ladite zone d'accrochage.

4. Système selon la revendication 3, caractérisé en ce que lesdits moyens de gestion (C1, MSC1, MSC2, MSC3, VLR) comprennent des moyens de détachement pour exclure dudit canal de communication multi-locuteurs à accès libre ouvert un mobile rattaché sorti de ladite zone d'accrochage.

5. Système selon l'une quelconque des revendications 2 à 4, caractérisé en ce que lesdits moyens de gestion (C1, MSC1, MSC2, MSC3, VLR) comprennent des moyens pour commander sélectivement le basculement en mode point à point de deux mobiles rattachés à un canal de communication multi-locuteurs à accès libre ouvert, consécutivement à la sortie hors de la dite zone d'accrochage de l'un au moins desdits mobiles.

6. Système selon l'une quelconque des revendications 2 à 5, caractérisé en ce que ladite zone d'accrochage est une zone géographique.

7. Système selon la revendication 6, caractérisé en ce que ladite zone géographique est asservie à la position géographique dudit premier mobile au moment de l'ouverture dudit canal de communication multi-locuteurs à accès libre.

8. Système selon la revendication 7, caractérisé en ce que ladite zone géographique est asservie à la position géographique dudit premier mobile et en ce que lesdits moyens de gestion (C1, MSC1, MSC2, MSC3, VLR) sont adaptés pour déplacer ladite zone géographique en fonction du déplacement dudit premier mobile.

9. Système selon l'une quelconque des revendications 1 à 8, caractérisé en ce que ladite ouverture d'un canal de communication multi-locuteurs à accès libre par lesdits premiers moyens de commande conditionnelle est subordonnée à la disponibilité en ressource radiofréquence dudit réseau (RE) au moment où ladite demande d'ouverture d'un canal de communication multi-locuteurs à accès libre est initiée.

10. Système selon l'une quelconque des revendications 1 à 9, caractérisé en ce que ladite ouverture d'un canal de communication multi-locuteurs à accès libre par lesdits premiers moyens de commande conditionnelle est subordonnée à l'émission d'au moins un message par chacun desdits premier et deuxième mobiles (M1, M2).

11. Système selon l'une quelconque des revendications 1 à 10, caractérisé en ce que lesdits seconds moyens de commande conditionnelle sont adaptés pour commander, en fonction de l'un au moins des critères suivants, la fermeture d'un canal de communication multi-locuteurs à accès libre ouvert :
- absence d'émission sur ledit canal ouvert pendant une durée supérieure à un premier seuil déterminé,
- nombre de mobiles (M1, M2) rattachés à un canal de communication multi-locuteurs à accès libre ouvert inférieur à un deuxième seuil déterminé,
- disponibilité de la ressource radiofréquence dudit réseau inférieure à un troisième seuil déterminé.

12. Système selon l'une quelconque des revendications 1 à 11, caractérisé en ce que lesdits moyens de gestion (C1, MSC1, MSC2, MSC3, VLR) comprennent des moyens pour transmettre à chacun desdits mobiles rattachés à un canal de communication multi-locuteurs à accès libre ouvert l'une au moins des informations comprenant :
- des données d'identification des autres mobiles ,
- la distance actuelle entre ledit mobile et les autres mobiles,
- une liste actuelle des canaux de communication multi-locuteurs à accès libre ouverts.

13. Système selon l'une quelconque des revendications 1 à 12, caractérisé en ce que lesdits moyens de transmission comprennent des moyens d'inhibition pour interdire la réception par un mobile (M1, M2) d'un signal émis par ledit mobile sur un canal de communication multi-locuteurs à accès libre ouvert .

14. Système selon l'une quelconque des revendications 1 à 13, caractérisé en ce qu'il comprend plusieurs réseaux de radiocommunication (RE) distincts et au moins une unité centrale de coordination desdits réseaux pour la gestion d'un canal de communication multi-locuteurs à accès libre ouvert entre mobiles appartenant à des réseaux différents.
